# EUROPEAN PATENT APPLICATION

(11) **EP 4 520 180 A1**
(43) Date of publication of application: **12.03.2025**
(21) Application number: 23765433.0
(22) Date of filing: 21.07.2023
(51) Int. Cl.: A23G 3/54, A23G 3/36, A23G 3/42, A23L 29/231, A23L 29/269

(54) **FILLED SOFT CANDY AND PREPARATION METHOD THEREFOR**

(30) Priority: 14.07.2023 CN 202310865780
(71) Applicant: Sirio Healthcare (Anhui) Co., Ltd, Ma'anshan, Anhui 243000 (CN)
(72) Inventor: Yang, Mengdan, Ma'anshan, Anhui 243000 (CN)
(74) Representative: Petraz, Gilberto Luigi
(86) International application number: PCT/CN2023/108709
(87) International publication number: WO 2025/015621

(57) **Abstract**

Provided in the present application is a center-filled soft candy, including a core material and a candy shell, wherein the core material is wrapped around by the candy shell; an adhesiveness range of the core material is 1500~7000 mPa·s; a hardness range of the candy shell is 46000~53000g; a springiness range of the candy shell is 0.2~0.805; and a mass of the core material is not more than 30% of a mass of the center-filled soft candy. In the center-filled soft candy provided by the present application, the core material is centered, the thickness of the soft candy is moderate, the popping texture is good, the candy shell is hardened, the texture is tough, which may effectively resist the impact of the core material with high flowability, and the shape stability is good.

## Description

### Field of the Invention

The present application relates to the technical field of food, specifically to a center-filled soft candy and a preparation method thereof.

### Background of the Invention

Center-filled soft candy has become one of the most popular candies due to its advantages of popping texture and good chewiness, etc. In the prior art, during the preparation of center-filled soft candy, a material with high flowability at a common temperature is usually used as the core material to provide a popping texture. However, for materials with high flowability, if the content of materials with high flowability in the core material is high, the overall flowability of the core material is relatively high, which is prone to lead to the core material not being centered, so that the thickness of the candy shell of the produced center-filled soft candy is not uniform, which leads to the occurrence of bursting of the filling in the process of preparation, which reduces the yield of the center-filled soft candy, which is also not conducive to the storage of the center-filled soft candy. Moreover, the high flowability of the core material may also lead to its easy impact on the candy shell, resulting in the dispersion of the core material and the thinning of the candy shell, leading to the flattening of the center-filled soft candy and the loss of its original shape.

### Summary of the Invention

In order to solve the problems and deficiencies existing in the prior art, provided in the present application is a center-filled soft candy and a preparation method thereof, wherein the candy shell texture of the center-filled soft candy is tough and the core material has good flowability, which is also provided with a good chewiness and a popping texture. Also, the core material of the center-filled soft candy is relatively centered, and the center-filled soft candy is provided with good shape and good stability.

According to a first aspect of the present application, provided is a center-filled soft candy, including a core material and a candy shell, wherein the core material is wrapped around by the candy shell; an adhesiveness range of the core material is 1500~7000 mPa·s; a hardness range of the candy shell is 46000~53000g; a springiness range of the candy shell is 0.38~0.45 ; and a mass of the core material is not more than 30% of a mass of the center-filled soft candy.

The above-mentioned hardness and springiness performance parameters of the candy shell are obtained by testing using a texturometer (SMS TA XT plus) under the following conditions: pre-test speed of 1mm/s, test speed of 3mm/s, post-test speed of 3mm/s, trigger force of 10g, and a target mode of 75% of the deformation volume. Hardness and springiness are directly available on the texturometer, in which hardness indicates that once the probe senses the triggering force during the test, the probe will be subjected to the first compression, which squeezes the soft candy to have a deformation of 75% of its height and the force at that point is referred to as the hardness of the soft candy; and springiness indicates the ratio of the recovery height of the sample detected in the second compression to the deformation of the first compression.

The adhesiveness of the core material and the hardness and springiness of the candy shell are controlled to be within the range mentioned above in the center-filled soft candy of the present application; on the one side, it may ensure that the core material is provided with certain flowability so that the center-filled soft candy is provided with a good popping texture; and on the flip side, it may ensure that the candy shell is provided with certain impact resistance so that the candy shell may still maintain the original shape of itself under the impact pressure against the core material with high flowability, which prevents dispersion of the core material and maintains the shape stability of the center-filled soft candy. Additionally, the hardness of the candy shell is kept to be within the range mentioned above is conducive to ensuring the toughness of the candy shell and ensure the chewiness of the center-filled soft candy. Moreover, the mass of the core material is controlled to be no more than 30% of the center-filled soft candy, which is conducive to maintaining the popping texture and also ensuring the relative stability between the core material and the candy shell of the center-filled soft candy, which further ensures the shape stability and storage stability of the center-filled soft candy.

Preferably, an adhesiveness range of the core material is 1500~5000 mPa·s.

Preferably, core material includes 900~1030 portions of a first sweetener and 1~10 portions of xanthan gum, which are all calculated to be in portions by weight; candy shell includes 35~45 portions of high-ester pectin, 900~1030 portions of a second sweetener, 5~20 portions of an acidity regulator, which are all calculated to be in portions by weight. During the preparation of the core material, the proportion between the first sweetener and the xanthan gum is controlled to be within the range mentioned above to enable the core material to be provided with a suitable adhesiveness, which facilitates the subsequent processing. During the preparation of the candy shell, the high-ester pectin, the second sweetener, and the acidity regulator are controlled to be within the range mentioned above, which is conducive to enabling the formed candy shell to be provided with a tough texture. In particular, the proportion of the pectin is controlled to ensure that the candy shell may be provided with a relatively quick gelation speed, which ensures that the core material of the center-filled soft candy is wrapped quickly, which prevents the core material with high flowability from dispersing or even breaking through the candy shell due to the excessive slow gelation of the candy shell, which may deteriorate the shape stability of the center-filled soft candy and affect the popping texture of the center-filled soft candy. Thus, under the material composition and proportion of the core material as well as the candy shell mentioned above, it may ensure that the core material is provided with a suitable adhesiveness, which may also avoid problems of, such as noncentrality of the core material with strong flowability, uneven thickness of the soft candy, and impact on the candy shell, so that the center-filled soft candy is provided with a higher nutrition level and a better-popping texture, the shape of the center-filled soft candy is stable, and the shape of the center-filled soft candy is beautiful.

Preferably, the first sweetener or the second sweetener comprises at least one of honey, syrups, sugar alcohols, and fruit juices independently.

Preferably, the first sweetener or the second sweetener is honey independently. Honey is a sweet substance stored in the hive by bees after thorough brewing of collected plant nectar or nectar dew exuded from plant cells, or insect excretions of nectar mixed with secretions from the salivary glands of the honeybee. Honey contains more than 180 different substances, of which the main components are glucose and fructose, which account for about 70%, and the other components are a variety of amino acids, minerals, aromatic substances, pigments, hormones, organic acids, enzymes, and biologically active substances, so honey offers an extremely high nutritional and health care value. Honey offers a pleasant aroma and is used as a sweetener in candy processing. Regular consumption of honey not only does not cause dental caries but also provides oral health benefits, and long-term consumption of honey does not cause obesity, which alleviates concerns about weight gain.

Preferably, the proportion of the high-ester pectin is from 3.5wt% to 4.5wt% in the candy shell.

High-ester pectin, also known as pectin, is a group of polygalacturonic acids. High-ester pectin is water-soluble and industrially separable, and its molecular weight is about 50,000~300,000. Under suitable conditions, its solution may form gels and partially undergo methoxylation (methylation, i.e., the formation of methanol esters), and its main component is the partially methylated α(1,4)-D-polygalacturonic acid.

Preferably, the acidity regulator includes at least one of citric acid monohydrate, sodium citrate, malic acid, lactic acid, phosphoric acid, sodium pyrophosphate, sodium hexametaphosphate, disodium hydrogen phosphate, disodium dihydrogen phosphate, calcium hydrogen phosphate.

According to a second aspect of the present application, provided is a preparation method of a center-filled soft candy, including following steps: in a step S1, dissolving the high-ester pectin and a first acidity regulator in water to obtain a first candy-shell gel solution; in a step S2, mixing the first sweetener and the first candy-shell gel solution, boiling at 110~140°C until a solid content is 70~80%, adding a second acidity regulator and mixing well to obtain a second candy-shell gel solution, heat preserving the second candy-shell gel solution at 90~100°C, and a pH of the second candy-shell gel solution is 3.35~3.65; in a step S3, heating the second sweetener to 40~75°C, vacuumizing for the first time, then adding and evenly dissolving the third acidity regulator and xanthan gum therein, vacuumizing for the second time, obtaining a core-material gel solution, and heat preserving the core-material gel solution at 70~80°C; and in a step S4, casting, wherein the second candy-shell gel solution is as candy shell material and the core-material gel solution is as core material together, and drying to produce the center-filled soft candy.

In the preparation method of the center-filled soft candy provided in the present application, by controlling the solid content, temperature, pH, and other conditions in each preparation step, the yield of the center-filled soft candy may be improved, and the center-filled soft candy may be provided with better shape stability, chewiness and popping texture. Additionally, in the step S2, the pH of the second candy shell gel solution is controlled within a certain range during the preparation process, which is conducive to preventing the second candy shell gel solution from being prone to flocculation due to a low pH, and at the same time preventing the candy shells formed by the second candy shell gel solution from being poorly stabilized due to a high pH. In the step S3, by vacuumizing the honey under a certain temperature range, for one thing, it may effectively reduce air bubbles in the mixing process of honey to avoid the air bubbles affecting the subsequent production of the center-filled soft candy as well as the taste; for another, it may avoid the boiling caused by the high temperature, the boiling may produce more air bubbles and lead to accidents. At the same time, the step S3 may avoid the water caused by the low temperature, which is difficult to be eliminated and may affect the taste and shape as well as the storage stability of the center-filled soft candy.

Preferably, in the step S3, an adhesiveness range of a core material colloid is 1500~5000 mPa·s. The adhesiveness of the core material gel solution is controlled to be within a certain range; for one thing, it may avoid easy leakage in the casting process caused by too low adhesiveness, and for another, it may avoid easy pulling in the casting process caused by too high adhesiveness, which may affect the appearance of the final product of the center-filled soft candy.

Preferably, in the step S3, for the first vacuum and the second vacuum, a vacuum level is set at 0.80~1.0 Bar and a duration of vacuumizing is 3~7 minutes.

Preferably, in the step S4, in the process of casting, a delay of 150~250mm is applied in the casting of the core-material gel solution compared to the second candy-shell gel solution. The core material gel solution is controlled to be cast slightly later than the second candy-shell gel solution, which is conducive to the second candy-shell gel solution having sufficient time for gel molding as well as smoothly wrapping the core material, to ensure the yield rate of the center-filled soft candy.

Preferably, a difference between a solid content of the second candy-shell gel solution and a solid content of the core-material gel solution is 2~4%. The ratio of the solid content of the second candy-shell gel solution to that of the core material is controlled to facilitate the successful casting process and to avoid the influence of too thin or too thick gel solution on the casting, which is not conducive to the production of the center-filled soft candy, and it may even result in the deterioration of the texture as well as the shape stability of the center-filled soft candy.

Preferably, in the step S4, in the process of casting, the temperature of the core-material gel solution and the second candy-shell gel solution is controlled to be 70~80°C. The core material and the second candy-shell gel solution are controlled to be within the above temperature range, which is conducive to a better flowability of the two types of gel solution during casting, improving the efficiency of casting.

Preferably, in the step S4, in the process of drying, the temperature is controlled to be 45~50°C and the humidity is controlled to be 25~30%RH.

In summary, for the center-filled soft candy provided by the present application, the core material is centered, the thickness of the soft candy is moderate, the popping texture is good, the candy shell is hardened, and the texture is tough, which may effectively resist the impact of the core material with strong flowability, and the shape stability is good.

### Detailed description of the preferred examples

For a better understanding of the solutions of the present application by those skilled in the art, the technical solutions in the examples of the present application are clearly and completely described and discussed below. Obviously, the examples described herein are only some of the examples of the present application but not all of them.

### Example 1

In the preparation of the center-filled soft candy in the present example, the formula for the core material is 1016 portions of acacia honey, 10 portions of citric acid monohydrate, 3 portions of xanthan gum, and 20 portions of purified water, and the formula for the candy shell is 1000 portions of acacia honey, 42 portions of high-ester pectin, 8 portions of citric acid monohydrate, 5 portions of sodium citrate, and 100 portions of water, which are all calculated to be in portions by weight.

Preparing the center-filled soft candy in the present example according to a preparation method as follows:
in a step S1, dissolving 42 portions of high-ester pectin, 5 portions of sodium citrate, and 2 portions of citric acid monohydrate in 80~90°C water to obtain a first candy-shell gel solution;
in a step S2, mixing 1000 portions of acacia honey and the first candy-shell gel solution, boiling at 110~130°C until a solid content is 75%, adding 6 portions of citric acid monohydrate and mixing well to obtain a second candy-shell gel solution, heat preserving the second candy-shell gel solution at 90~100°C, and a pH of the second candy-shell gel solution is 3.35~3.65;
in a step S3, heating 1016 portions of acacia honey to 70°C, vacuumizing for the first time with a vacuum level of 0.80~1.0Bar for 5 minutes, then adding and evenly dissolving 10 portions of citric acid monohydrate and 3 portions of xanthan gum therein, vacuumizing for the second time with a vacuum level of 0.80~1.0Bar for 5 minutes, obtaining a core-material gel solution, and heat preserving the core-material gel solution at 70~80°C; and
in a step S4, the second candy-shell gel solution is used as the candy shell material, and the core material gel solution is used as the core material, which are cast and molded together, dried, demolded, polished or mixed with granulated sugar, thereby obtaining the center-filled soft candy. During the casting, the core material gel solution is delayed by 150~250mm compared to the candy-shell gel solution, and a starch compression mold, a metal mold, or a silica mold is used for the molding process. During the drying process, the temperature is controlled to be 45~50°C, and the humidity is controlled to be 25~30% RH. In the present step, the mass ratio of the core material to the candy shell in the finally obtained center-filled soft candy is controlled to be 1~3:7~9 by controlling the casting amount of the second candy-shell gel solution as well as the core material gel solution.

### Example 2

In the present example, a total of five processing groups are set up, which are recorded as processing group 1#, processing group 2#, processing group 3#, processing group 4#, and processing group 5# respectively. The content of xanthan gum in the core material is used as a variable for the five processing groups, in which the xanthan gum content is calculated, based on a total amount required for the preparation of the core material, as: xanthan gum content = xanthan gum / (xanthan gum + acacia honey + citric acid monohydrate + purified water). And the xanthan gum content in the processing group 1#, processing group 2#, processing group 3#, processing group 4#, and processing group 5# are 0%, 0.1%, 0.3%, 0.6%, and 0.7% respectively.

In the processing group 1#, in the preparation of the center-filled soft candy, which differs from example 1 in that the formula for the core material is 1016 portions of acacia honey, 10 portions of citric acid monohydrate, and 20 portions of purified water, so as to control that the xanthan gum content of the core material in the processing group 1# is 0%; the others are consistent with example 1.

In the processing group 2#, in the preparation of the center-filled soft candy, which differs from example 1 in that the formula for the core material is 1016 portions of acacia honey, 10 portions of citric acid monohydrate, 20 portions of purified water and 1 portion of xanthan gum, so as to control that the xanthan gum content of the core material in the processing group 2# is 0.1%; the others are consistent with example 1.

In the processing group 3#, in the preparation of the center-filled soft candy, which differs from example 1 in that the formula for the core material is 1016 portions of acacia honey, 10 portions of citric acid monohydrate, 20 portions of purified water and 3.67 portions of xanthan gum, so as to control that the xanthan gum content of the core material in the processing group 3# is 0.3%; the others are consistent with example 1.

In the processing group 4#, in the preparation of the center-filled soft candy, which differs from example 1 in that the formula for the core material is 1016 portions of acacia honey, 10 portions of citric acid monohydrate, 20 portions of purified water and 6.3 portions of xanthan gum, so as to control that the xanthan gum content of the core material in the processing group 4# is 0.6%; the others are consistent with example 1.

In the processing group 5#, in the preparation of the center-filled soft candy, which differs from example 1 in that the formula for the core material is 1016 portions of acacia honey, 10 portions of citric acid monohydrate, 20 portions of purified water and 7.37 portions of xanthan gum, so as to control that the xanthan gum content of the core material in the processing group 5# is 0.7%; the others are consistent with example 1.

### Test Example 1

In the preparation of the center-filled soft candy of each processing group in Example 2, the core material in each processing group is observed whether dripping and pulling phenomena occur during the casting process, and the core material in the center-filled soft candy obtained from each processing group in Example 2 is tested for adhesiveness and centrality degree of the core material, and the yield rate (finished product rate) of the center-filled soft candy in each processing group is calculated.

The adhesiveness of the core material is tested by using a DVS + viscometer according to the following method.
A) Install the viscometer and adjust the viscometer to be horizontal.
B) Connect the viscometer power supply and turn it on.
C) Use the rotor up-down arrow keys to enter rotor code 4.
D) Use the rotate speed up-down arrow keys to enter a speed of 30 RPM.
E) Place the #4 rotor into the core material solution and attach it to the connector.
F) Press the motor on/off key to start the test. When the test is completed, press the motor on/off key again to turn off the motor.
G) Record the test result.

The test method of the centrality degree of the core material is as follows: cutting the soft candy with scissors; cleaning the core material with cold water; measuring the thickness of the candy shell with a vernier caliper; and recording the minimum and maximum thicknesses, in which the centrality degree = Minimum thickness / Maximum thickness × 100%.

The yield rate of the center-filled soft candy is calculated as follows: manual picking is adopted to exclude the unqualified samples with popping, abnormality, pulling, concavity, and defects. The test method is based on the provided standard samples, and the picking criteria are specified through sensory descriptions. Yield rate = Quantity of soft candy after picking / Quantity of soft candy before picking × 100%

Relevant performance parameters of center-filled soft candy for each processing group in Example 2 are shown in Table 1.

**Table 1 Results of relevant performance parameters of center-filled soft candy for each processing group in Example 2**

| Example 2 | Processing Group 1# | Processing Group 2# | Processing Group 3# | Processing Group 4# | Processing Group 5# |
|---|---|---|---|---|---|
| Concentration of Xanthan Gum | 0% | 0.1% | 0.3% | 0.6% | 0.7% |
| Final product adhesiveness (mPa·s) | 584 | 1648 | 3225 | 4532 | 6855 |
| Whether dripping occurs during the casting | YES | NO | NO | NO | NO |
| Whether pulling occurs during the casting | NO | NO | NO | NO | YES |
| Centrality | 20% | 70% | 80% | 85% | 85% |
| Yield rate | 0 | 70% | 80% | 80% | 80% |

It is evident from Table 1 that when the adhesiveness of the core material of the product is controlled to be 1500~7000 mPa·s, the produced center-filled soft candy is provided with good centrality degree and yield rate, but the problem of pulling occurs. When the adhesiveness of the core material of the product is controlled to be 1500~5000 mPa·s, it is not only provided with good centrality degree and yield rate, but also provided with better feasibility of process operation as no dripping or pulling phenomenon occurs during the casting process.

### Example 3

In the present example, a total of five processing groups are set up, which are recorded as processing group 6#, processing group 7#, processing group 8#, processing group 9#, and processing group 10# respectively. The content of high-ester pectin in the candy shell is used as a variable for the five processing groups, in which the high-ester pectin content is calculated, based on a total amount required for the preparation of the candy shell, as: high-ester pectin content = high-ester pectin / (high-ester pectin + acacia honey + citric acid monohydrate + sodium citrate + water). And the high-ester pectin content in the processing group 6#, processing group 7#, processing group 8#, processing group 9#, and processing group 10# are 3%, 3.5%, 4%, 4.5%, and 5% respectively.

In the processing group 6#, in the preparation of the center-filled soft candy, which differs from example 1 in that the formula for the candy shell is 1000 portions of acacia honey, 8 portions of citric acid monohydrate, 5 portions of sodium citrate, 100 portions of water and 34.4 portions of high-ester pectin, so as to control that the high-ester pectin content of the candy shell in the processing group 6# is 3%; the others are consistent with example 1.

In the processing group 7#, in the preparation of the center-filled soft candy, which differs from example 1 in that the formula for the candy shell is 1000 portions of acacia honey, 8 portions of citric acid monohydrate, 5 portions of sodium citrate, 100 portions of water and 40.37 portions of high-ester pectin, so as to control that the high-ester pectin content of the candy shell in the processing group 7# is 3.5%; the others are consistent with example 1.

In the processing group 8#, in the preparation of the center-filled soft candy, which differs from example 1 in that the formula for the candy shell is 1000 portions of acacia honey, 8 portions of citric acid monohydrate, 5 portions of sodium citrate, 100 portions of water and 46.375 portions of high-ester pectin, so as to control that the high-ester pectin content of the candy shell in the processing group 8# is 4%; the others are consistent with example 1.

In the processing group 9#, in the preparation of the center-filled soft candy, which differs from example 1 in that the formula for the candy shell is 1000 portions of acacia honey, 8 portions of citric acid monohydrate, 5 portions of sodium citrate, 100 portions of water and 52.44 portions of high-ester pectin, so as to control that the high-ester pectin content of the candy shell in the processing group 9# is 4.5%; the others are consistent with example 1.

In the processing group 10#, in the preparation of the center-filled soft candy, which differs from example 1 in that the formula for the candy shell is 1000 portions of acacia honey, 8 portions of citric acid monohydrate, 5 portions of sodium citrate, 100 portions of water and 58.58 portions of high-ester pectin, so as to control that the high-ester pectin content of the candy shell in the processing group 10# is 5%; the others are consistent with example 1.

### Test Example 2

In the preparation of the center-filled soft candy of each processing group in Example 3, the adhesiveness and the gelation speed of the second candy shell gel solution in each processing group are tested; the hardness, the springiness, the resilience, and the bursting force of the candy shell in the center-filled soft candy in each processing group are tested; and the yield rate (finished product rate) of the center-filled soft candy in each processing group is calculated.

Please refer to the Test Example 1 for the test of the adhesiveness of the second candy shell gel solution and the yield rate of the center-filled soft candy.

The gelation speed of the second candy-shell gel solution is tested by using a DVS + viscometer to test the gelation speed of the gel solution according to the following method.
A) Install the viscometer and adjust the viscometer to be horizontal.
B) Connect the viscometer power supply and turn it on.
C) Use the rotor up-down arrow keys to enter rotor code 7.
D) Use the rpm up-down arrow keys to enter a speed of 1 rpm.
E) Place the #7 rotor into the candy-shell gel solution and attach it to the connector.
F) Press the motor on/off key to start the test.
G) A stopwatch is used to record the test time while observing the changes in adhesiveness and torque during the test. At the beginning of the test, there is a relatively small variation in the data. As time continues, both adhesiveness and torque rise. Adhesiveness and torque increase rapidly as the material approaches its natural solidified state. When a rapid increase in adhesiveness and torque is observed, the running time of the stopwatch is recorded and this time is the approximate gelation time for the material. The shorter the gelation time is, the faster the gelation speed is, and the gelation speed is indicated by the gelation time.

The hardness and springiness of the candy shell in the center-filled soft candy is tested by:
The texture of the shell-only soft candy is tested according to the TPA (texture profile analysis) method by an SMS TA XT plus texturometer. Tests are performed under the following test conditions: pre-test speed of 1mm/s, test speed of 3mm/s, post-test speed of 3mm/s, trigger force of 10g, and a target mode of 75% of the deformation volume. Each sample is taken separately for testing, in which the finished product is controlled to be consistent in specification and shape, which is cylindrical in shape and 3.0g of each candy with a weight deviation of no more than 0.1g. Each group of samples is tested in parallel for 8 times, and the average value is taken as the result of the texture test;
Data readout: Once the probe senses the trigger force, the probe starts the first compression to squeeze the soft candy to deform to 75% of its height, and the force at that point is known as the hardness of the soft candy. Springiness indicates the ratio of the recovery height of the sample detected in the second compression to the deformation of the first compression. The texturometer automatically outputs two compression charts and specific hardness and springiness indexes after the test is completed.

The bursting force of the candy shell is tested by:
The texture of the prepared center-filled soft candy is tested according to the TPA (texture profile analysis) method by an SMS TA XT plus texturometer. Tests are performed under the following test conditions: pre-test speed of 1mm/s, test speed of 3mm/s, post-test speed of 3mm/s, trigger force of 10g, and a target mode of 75% of the deformation volume. Each sample was taken separately for testing, in which the finished product is controlled to be consistent in specification and shape, which is cylindrical in shape and 4.25g of each candy with a weight deviation of no more than 0.1g. Each group of samples is tested in parallel for 8 times, and the average value is taken as the result of the texture test;
Data readout: Once the probe senses the trigger force, the probe starts a compression to squeeze the soft candy to deform to 75% of its height, and the maximum force sensed is known as the bursting force.

Relevant performance parameters of center-filled soft candy for each processing group in Example 3 are shown in Table 2.

**Table 2 Results of relevant performance parameters of center-filled soft candy for each processing group in Example 3**

| Example 3 | Processing Group 6# | Processing Group 7# | Processing Group 8# | Processing Group 9# | Processing Group 10# |
|---|---|---|---|---|---|
| High-ester pectin content | 3% | 3.5% | 4% | 4.5% | 5% |
| Hardness (g) | 42944.78 | 46022.08 | 48754.13 | 52988.84 | 53933.93 |
| Springiness | 0.827 | 0.803 | 0.793 | 0.23 | 0 |
| Adhesiveness (mPa·s) | 1314 | 2462 | 3655 | 4631 | 6223 |
| Bursting force (g) | 8954.139 | 15382.182 | 22397.773 | 27642.065 | 37181.515 |
| Gelation time | 218s | 144s | 127s | 107s | 54s |
| Yield rate | 40% | 80% | 80% | 80% | 20% |

It is evident from Table 2 that the candy shell is conducive to being provided with a good texture, when the adhesiveness of the core material of the center-filled soft candy is controlled at a certain level and when the hardness and springiness of the candy shell are in a range of 46,000~53,000g and a range of 0.2~0.805 respectively, which may improve the fixing and wrapping ability of the candy shell to the core material and improve the shape stability and storage stability of the center-filled soft candy. It is evident from the above processing groups that it is conducive to enhancing the gelation rate of the second candy shell, and improving the yield rate of the center-filled soft candy as well as the bursting force of the candy shell, by controlling the hardness, springiness, and resilience of the candy shell within a certain range.

### Example 4

In the present example, a total of five processing groups are set up, which are recorded as processing group 11#, processing group 12#, processing group 13#, processing group 14#, and processing group 15# respectively. The pH of the second candy-shell gel solution is used as a variable for the five processing groups, in which the pH of the second candy-shell gel solution in the processing group 11#, processing group 12#, processing group 13#, processing group 14#, and processing group 15# are 3.3, 3.35, 3.45, 3.65, and 3.7 respectively.

In the processing group 11#, in the preparation of the center-filled soft candy, which differs from example 1 in that the formula for the candy shell includes 1000 portions of acacia honey, 42 portions of high-ester pectin, 5 portions of sodium citrate, and 100 portions of water, and in the preparation of the second candy-shell gel solution in the step S2, the amount of the citric acid monohydrate is regulated to control the pH of the second candy-shell gel solution of the processing group 11# to be 3.3; the others are consistent with example 1.

In the processing group 12#, in the preparation of the center-filled soft candy, which differs from example 1 in that the formula for the candy shell includes 1000 portions of acacia honey, 42 portions of high-ester pectin, 5 portions of sodium citrate, and 100 portions of water, and in the preparation of the second candy-shell gel solution in the step S2, the amount of the citric acid monohydrate is regulated to control the pH of the second candy-shell gel solution of the processing group 12# to be 3.35; the others are consistent with example 1.

In the processing group 13#, in the preparation of the center-filled soft candy, which differs from example 1 in that the formula for the candy shell includes 1000 portions of acacia honey, 42 portions of high-ester pectin, 5 portions of sodium citrate, and 100 portions of water, and in the preparation of the second candy-shell gel solution in the step S2, the amount of the citric acid monohydrate is regulated to control the pH of the second candy-shell gel solution of the processing group 13# to be 3.45; the others are consistent with example 1.

In the processing group 14#, in the preparation of the center-filled soft candy, which differs from example 1 in that the formula for the candy shell includes 1000 portions of acacia honey, 42 portions of high-ester pectin, 5 portions of sodium citrate, and 100 portions of water, and in the preparation of the second candy-shell gel solution in the step S2, the amount of the citric acid monohydrate is regulated to control the pH of the second candy-shell gel solution of the processing group 14# to be 3.65; the others are consistent with example 1.

In the processing group 15#, in the preparation of the center-filled soft candy, which differs from example 1 in that the formula for the candy shell includes 1000 portions of acacia honey, 42 portions of high-ester pectin, 5 portions of sodium citrate, and 100 portions of water, and in the preparation of the second candy-shell gel solution in the step S2, the amount of the citric acid monohydrate is regulated to control the pH of the second candy-shell gel solution of the processing group 15# to be 3.7; the others are consistent with example 1.

### Test Example 3

In each processing group of the example, the gelation speed test (indicated by gelation time) of the second candy-shell gel solution and the yield rate (finished product rate) of the center-filled soft candy are tested. Please refer to Test Example 1 as well as Test Example 2 for specific test methods.

Relevant performance parameters of center-filled soft candy for each processing group in Example 4 are shown in Table 3.

**Table 3 Results of relevant performance parameters of center-filled soft candy for each processing group in Example 4**

| Example 4 | Processing Group 11# | Processing Group 12# | Processing Group 13# | Processing Group 14# | Processing Group 15# |
|---|---|---|---|---|---|
| pH | 3.3 | 3.35 | 3.45 | 3.65 | 3.7 |
| Gelation time | 68s | 104s | 125s | 181s | 234s |
| Yield rate | 20% | 80% | 80% | 70% | 30% |

It is evident from Table 3 that the gel formation rate of the second candy shell and the yield rate of the center-filled soft candy are improved by adjusting the pH of the second candy-shell gel solution in the range of 3.35~3.65. However, when the pH is lower than 3.35, the gelation is too fast, resulting in low production yield; when the pH is higher than 3.7, the gelation is slow and the gel strength is not strong enough, which also results in lower yield.

### Example 5

In the present example, a total of four processing groups are set up, which are recorded as processing group 16#, processing group 17#, processing group 18#, and processing group 19# respectively. The mass fraction of the core material in the center-filled soft candy is used as a variable for the four processing groups, in which the mass fraction of the core material in the center-filled soft candy in the processing group 16#, processing group 17#, processing group 18#, and processing group 19# are 10%, 15%, 25%, and 30% respectively.

In the processing group 16#, in the preparation of the center-filled soft candy, which differs from example 1 in that the mass fraction of the core material in the final center-filled soft candy is controlled to be 10% of the center-filled soft candy; the others are consistent with example 1.

In the processing group 17#, in the preparation of the center-filled soft candy, which differs from example 1 in that the mass fraction of the core material in the final center-filled soft candy is controlled to be 15% of the center-filled soft candy; the others are consistent with example 1.

In the processing group 18#, in the preparation of the center-filled soft candy, which differs from example 1 in that the mass fraction of the core material in the final center-filled soft candy is controlled to be 25% of the center-filled soft candy; the others are consistent with example 1.

In the processing group 19#, in the preparation of the center-filled soft candy, which differs from example 1 in that the mass fraction of the core material in the final center-filled soft candy is controlled to be 30% of the center-filled soft candy; the others are consistent with example 1.

In the processing group 20#, in the preparation of the center-filled soft candy, which differs from example 1 in that the mass fraction of the core material in the final center-filled soft candy is controlled to be 31% of the center-filled soft candy; the others are consistent with example 1.

### Test Example 4

In the center-filled soft candy of each processing group in Example 5, bursting force of the candy shell and yield rate of the center-filled soft candy are tested. Please refer to Test Example 1 as well as Test Example 2 for specific test methods.

Relevant performance parameters of center-filled soft candy for each processing group in Example 5 are shown in Table 4.

**Table 4 Results of relevant performance parameters of center-filled soft candy for each processing group in Example 5**

| Example 5 | Processing Group 16# | Processing Group 17# | Processing Group 18# | Processing Group 19# | Processing Group 20# |
|---|---|---|---|---|---|
| Mass fraction of the core material in the center-filled soft candy | 10% | 15% | 25% | 30% | 31% |
| Bursting force (g) | 38187.543 | 28744.524 | 23951.189 | 14948.492 | 13857.238 |
| Yield rate | 95% | 90% | 86% | 80% | 76% |

It is evident from Table 4 that the bursting force of the candy shell and the yield rate of the center-filled soft candy may be effectively improved by controlling the mass fraction of the core material in the center-filled soft candy to be 10%~30%.

The embodiments mentioned above are only used to illustrate the technical solution of the present application but not to limit the protection scope of the present application. Although a detailed description of the present application has been made with reference to the embodiments mentioned above, those skilled in the art should understand that modifications or equivalent substitutions may be made to the technical solution of the present application. However, these modifications or substitutions fall within the protection scope of the present application.

### Example 6

In the present example, a total of two processing groups are set up and recorded as processing group 21# and processing group 22#. The two processing groups differ from Example 1 in that the honey in Example 1 is replaced with maltitol in processing group 21#, and the honey in Example 1 is replaced with apple juice concentrate in processing group 22#; the others are consistent with example 1.

### Test Example 5

In the preparation of the center-filled soft candy of each processing group in Example 6, the core material in each processing group is observed whether dripping or pulling occurs during the casting process. The core material in the center-filled soft candy obtained from each processing group in Example 6 is subjected to an adhesiveness test, a core material centrality degree test. The yield rate (finished product rate) of the center-filled soft candy in each processing group is calculated. For adhesiveness test, core material centrality degree test, and yield rate, please refer to Test Example 2.

Relevant performance parameters of center-filled soft candy for each processing group in Example 6 are shown in Table 5.

**Table 5 Results of relevant performance parameters of center-filled soft candy for each processing group in Example 6**

| Example 6 | Processing Group 21# | Processing Group 22# |
|---|---|---|
| Final product adhesiveness (mPa·s) | 3057 | 2548 |
| Whether dripping occurs during the casting | NO | NO |
| Whether pulling occurs during the casting | NO | NO |
| Centrality | 80% | 80% |
| Yield rate | 80% | 80% |

It is evident from Table 5 mentioned above that other sweeteners may also be utilized instead of honey to prepare the center-filled soft candy with moderate adhesiveness, good core material centrality degree, and good yield rate.

## Claims

1. A center-filled soft candy, **characterized by** comprising a core material and a candy shell,
wherein the core material is wrapped around by the candy shell;
an adhesiveness range of the core material is 1500~7000 mPa·s;
a hardness range of the candy shell is 46000~53000g;
a springiness range of the candy shell is 0.2~0.805; and
a mass of the core material is not more than 30% of a mass of the center-filled soft candy.

2. The center-filled soft candy according to claim 1, **characterized in that**:
raw materials for preparing the core material comprise 900~1030 portions of a first sweetener, 1~10 portions of xanthan gum, and 10~100 portions of water, which are all calculated to be in portions by weight;
raw materials for preparing the candy shell comprise 35~45 portions of high-ester pectin, 900~1030 portions of a second sweetener, 5~20 portions of an acidity regulator, and 100~500 portions of water, which are all calculated to be in portions by weight;

3. The center-filled soft candy according to claim 2, **characterized in that** the proportion of the high-ester pectin in a mass of the raw materials for preparing the candy shell is 3.5wt%~4.5wt% in the candy shell.

4. The center-filled soft candy according to claim 2, **characterized in that** the first sweetener or the second sweetener comprises at least one of honey, syrups, sugar alcohols, and fruit juices independently.

5. A preparation method of a center-filled soft candy, **characterized by** comprising following steps:
in a step S1, dissolving the high-ester pectin and a first acidity regulator in water to obtain a first candy-shell gel solution;
in a step S2, mixing the first sweetener and the first candy-shell gel solution, boiling at 110~140°C until a solid content is 70~80%, adding a second acidity regulator and mixing well to obtain a second candy-shell gel solution, heat preserving the second candy-shell gel solution at 90~100°C, and a pH of the second candy-shell gel solution is 3.35~3.65;
in a step S3, heating the second sweetener to 40~75°C, vacuumizing for the first time, then adding and evenly dissolving the third acidity regulator and xanthan gum therein, vacuumizing for the second time, obtaining a core-material gel solution, and heat preserving the core-material gel solution at 70~80°C; and
in a step S4, casting and drying the second candy-shell gel solution as candy shell material and the core-material gel solution as core material together to produce the center-filled soft candy.

6. The preparation method of center-filled soft candy according to claim 4, **characterized in that** in the step S3, an adhesiveness range of a core material colloid is 1500~5000 mPa·s.

7. The preparation method of center-filled soft candy according to claim 5, **characterized in that** in the step S3, for vacuumizing for the first time and vacuumizing for the second time, a vacuum level is set at 0.80~1.0 Bar and a duration of vacuumizing is 3~7 minutes.

8. The preparation method of center-filled soft candy according to claim 5, **characterized in that** in the step S4, in the process of casting, a delay of 150~250mm is applied in the casting of the core-material gel solution compared to the second candy-shell gel solution.

9. The preparation method of center-filled soft candy according to claim 5, **characterized in that** a difference between a solid content of the second candy-shell gel solution and a solid content of the core-material gel solution is 2~4%.

10. The preparation method of center-filled soft candy according to claim 5, **characterized in that** in the step S4, in the process of casting, a temperature for the core-material gel solution and the second candy-shell gel solution is controlled to 70~80°C.
